# EUROPÄISCHE PATENTSCHRIFT

(11) **EP 1 185 351 B1**
(45) Veröffentlichungstag und Bekanntmachung des Hinweises auf die Patenterteilung: **18.06.2003**
(21) Anmeldenummer: 00922579.8
(22) Anmeldetag: 31.03.2000
(51) Int. Cl.: B01D 46/04, B01D 46/52

(54) **VERFAHREN ZUM ABREINIGEN VON FILTERN**
METHOD OF CLEANING FILTERS
PROCEDE DE NETTOYAGE DE FILTRES

(30) Priorität: 16.04.1999 DE 19917168
(43) Veröffentlichungstag der Anmeldung: 13.03.2002
(73) Patentinhaber: Forschungszentrum Karlsruhe GmbH, 76133 Karlsruhe (DE)
(72) Erfinder: LEIBOLD, Hans, D-76316 Malsch-Waldprechtsweier (DE)
(86) Internationale Anmeldenummer: EP0002842
(87) Internationale Veröffentlichungsnummer: WO00062901

(56) Entgegenhaltungen:
- EP-B- 0 551 951
- DE-U- 9 000 579
- US-A- 3 864 108

## Beschreibung

Die vorliegende Erfindung betrifft ein Verfahren zum Abreinigen von durch Rohgas einseitig angeströmten Filtern, z. B. flächigen Schwebstoffiltern aus gefaltetem Filtermaterial wie Kassettenfiltern durch Rückspülen des Filters von der Reingasseite her, wobei der zum Rückspülen erforderliche Spülgasstrom vom Reingasraum hinter dem Filter her unter Absperren desselben durch den Filter geführt wird, sowie eine Vorrichtung zur Ausübung des Verfahrens.

Dabei befaßt sie sich speziell mit der Reinigung von Kompakt-Luftfiltern im eingebauten Zustand. Abreinigungseinheiten, die nach dem gleichen Prinzip funktionieren, weisen üblicherweise einen beweglichen Balken auf, der auf der Reingasseite über das Filterelement geführt wird und dabei ganz oder teilweise zum Filterelement hin abgedichtet ist. Dieser Balken wird direkt oder indirekt angetrieben, wobei vorwiegend mechanische und pneumatische Antriebseinheiten eingesetzt werden. Eine weitere Einrichtung zum Abreinigen besteht in der Anordnung von Rund- oder Schlitzdüsensystemen auf der Reingasseite des Filterelementes, bekannt aus der Schlauch- und Taschenfiltertechnik.

Solche Abreinigungseinrichtungen sind jedoch relativ störanfällig und erfordern einen unverhältnismäßig hohen konstruktiven und apparatetechnischen Aufwand. Kritisch ist die Abdichtung zum Filterelement hin, die über eine flexible Dichtung erzielt wird und einem hohen Verschleiß unterworfen ist. Durch die Führung des beweglichen Balkens muß gleichzeitig eine hohe Dichtkraft aufgebracht werden, was den Verschleiß zusätzlich begünstigt. Die gesamte Konstruktion muß im Blick auf die hohe Zahl der Abreinigungszyklen sehr robust ausgeführt werden. Sie wird dadurch schwer, so daß hohe Vortriebskräfte notwendig werden, ist daher teuer und für die Abreinigung großer Filterelemente sehr aufwendig. Man versucht deshalb, mehrere Filterelemente abzureinigen, wodurch jedoch die je Filterelement zur Verfügung stehende Spülluftmenge verringert wird. Durch die Verwendung beweglicher Teile für den Vortrieb des Balkens ist außerdem die Einsatztemperatur weit unter die mögliche Einsatztemperatur der Filtermaterialien begrenzt.

Die Ausführung mit starren Düsen erfordert bei großen Filtersystemen einen unvertretbar hohen konstruktiven und baulichen Aufwand, insbesondere bei tiefgefalteten Filtern mit 50 und mehr Falten je Filterkassette. Da eine direkte Ankoppelung der Reinigungseinheit an das Filter fehlt, können nur niedrige Abreinigungsintensitäten erzeugt werden.

DE-U-9000579 beschreibt eine Filtrationsvorrichtung mit Spaltfilerkerzen, bei der die Spaltfilerkerzen mit einem Spülgasstrom von der Reingasseite her abreinigbar sind. Bei dieser Vorrichtung ist jeder Spaltfilterkerze ein Rückschlagventil in der Form einer Verschlussklappe, d. h. eines beweglichen Teiles nachgeschaltet, welches ab einem vorgegebenen Druck den Gasstrom aus Richtung der Spaltfilterkerze unterbricht. Bei einer Abreinigung der Spaltfilterkerze wird der Spülgasstrom mit einem erhöhten Druck in das reingasseitige Volumen zwischen die Spaltfilterkerze und dem Rückschlagventil eingeleitet, wobei der erhöhte Gasdruck das Rückschlagventil schließt und die Spaltfilterkerze im Gegenstrom abgereinigt wird.

Ferner beschreibt EP 0 551 951 B1 ein Verfahren zum Abreinigen von durch Rohgas einseitig angeströmten Filtern durch Rückspülen des Filters von der Reingasseite her, wobei jedoch der zum Rückspülen benötigte Spülgasstrom reingasseitig in Kammern zwischen dem Filter und einer zweiten Filterfläche geführt wird. Diese zweite Filterfläche weist dabei eine mindestens um den Faktor 3 bis 5 größere Permeabilität und größere Porengröße als der abzureinigende Filter bei einer um bis zu 10-fach geringere Filterfläche auf, womit der während der Abreinigung über die zweiten Filterfläche abfließende Spülgasstromanteil allein durch diese konstruktive Gestaltung ohne bewegliche Teile begrenzt wird.

Davon ausgehend hat die vorliegende Erfindung zur Aufgabe, ein weiteres Verfahren zum Abreinigen von kassettenförmigen Schwebstoffiltern und Filtern ähnlichen Aufbaues unter Verzicht auf bewegliche störanfällige Teile zu schaffen.

Zur Lösung der Aufgabe schlägt die vorliegende Erfindung die Merkmale vor, die im kennzeichenden Teil des Patentanspruches 1 angeführt sind. Weitere erfindungsgemäße Merkmale sind in den kennzeichnenden Merkmalen der Unteransprüche zu sehen.

Die Erfindung gibt somit ein Verfahren an, mittels welchem die genannten Filter ohne bewegliche Teile auf einfache Art abgereinigt werden können. Große Filtereinheiten können somit extrem kompakt und wirtschaftlich aufgebaut werden, was einem Einsatz abreinigbarer Schwebstofffilter zum Beispiel im Kraftwerksbereich zugute kommt.

Einzelheiten der vorliegenden Erfindung werden im folgenden und anhand der Figuren näher erläutert. Es zeigen:
die Figur 1 den Schnitt durch ein Filterelement, mit welchem das neue Verfahren ausgeübt wird,
die Figur 2 die Draufsicht auf die Spüllufteinheit der Figur 1 um 90° gedreht und
die Figur 3 eine perspektivische Ansicht mit abgehobenem strömungsdynamischem Schalter.

In dem dargestellten Filtersystem wird ein Verfahren zum Abreinigen von durch Rohgas einseitig angeströmten Filtern, z.B. flächigen Schwebstoffiltern aus gefaltetem Filtermaterial wie Kassettenfiltern durch Rückspülen des Filters von der Reingasseite her ausgeübt. Dabei wird die zum Rückspülen erforderliche Spülluft vom Reingasraum hinter dem Filter her unter Absperren desselben durch den Filter geführt. Neu und besonders ist bei diesem Verfahren, daß das Absperren des Reingasraumes nach der Abluftseite durch einen strömungsdynamischen Schalter 6 ohne bewegliche Teile erfolgt, dessen Durchlaß durch den an ihm vom Reingasraum 8 bzw. der später beschriebenen Kammern 12 her wechselweise anliegenden niedrigeren Prozessdruck freigegeben und durch den höheren Rückspüldruck gesperrt wird. Dabei wird die Abreinigung unter Prozeßdruck mit einem Rückspüldruck durchgeführt, der höher als der Prozeßdruck ist. Das Rückspülmedium kann dabei vorteilhafterweise impulsweise eingeleitet werden. Der die Durchlässigkeit des strömungsdynamischen Schalters 6 bestimmende Druckverlust liegt im Bereich von 100 bis 250 Pa bei 2,5 cm/sec Strömungsgeschwindigkeit.

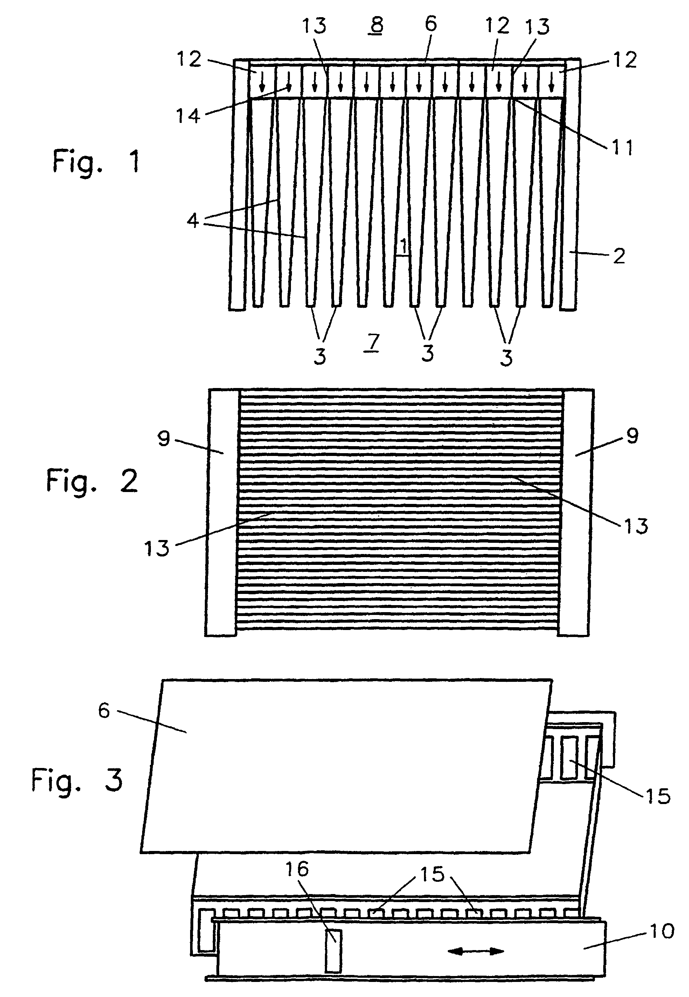

Das Filtersystem besteht gemäß den Figuren aus einem Kassettenfilter 1, aufgebaut aus einem Rahmen 2, in den ein Faltenpack 3 des Filtermateriales dicht eingesetzt ist. Dieser Faltenpack 3 kann zur Stabilisierung separate Abstandshalter aufweisen oder auch selbsttragend ausgeführt sein. Oberhalb des Kassettenfilters 1, auf der Reingasseite 8, ist eine Spüllufteinheit angeordnet, die die Spülluft 14 auf die einzelnen Falten des Faltenpackes 3 verteilt. Die Spüllufteinheit kann eine separate Einheit oder auch integraler Bestandteil des Kassettenfilters 1 sein. Sie besteht aus den Kammerwänden 13, die zum Kassettenfilter 1 hin dichtend mit den Faltenenden 11 abschließen. Zur Reingasseite 8 sind sie dichtend mit dem oben erwähnten strömungsdynamischen Schalter 6 verbunden und bilden zum Kassettenfilter 1 hin Kammern 12. Diese Kammern 12 gehören ebenfalls zur Reingasseite 8 bzw. dem Reingasraum. An beiden Stirnseiten werden die Kammern 12 durch separat schaltbare Öffnungen 15 (siehe die Figur 3) oder durch Lochleisten begrenzt, die die innere Wand der Spülluftverteiler 9 bilden. Diese sind in der Figur 2 dargestellt und führen die Spülluft seitlich (in der Figur 1 von vorn und hinten) zu. Bei der Ausführung mit Lochleisten gemäß der Figur 3 sind innerhalb der Spülluftverteiler 9 selbstdichtende bewegliche Bänder, Leisten oder umlaufende Riemen 10 so ausgeführt, daß eine Aussparung 16 nacheinander mit sämtlichen Öffnungen 15 der Lochleiste in Deckung gebracht werden kann, während gleichzeitig die übrigen der Öffnungen 15 verschlossen werden. Durch nicht dargestellte Steuerelemente werden in beiden Spülluftverteilern 9 jeweils die zu einer Falte des Faltenpackes 3 gehörigen Öffnungen 15 freigegeben, so daß die Spülluft in die eine freigebene Falte einströmen kann.

Während des Filtrationsvorganges sind sämtliche Öffnungen 15 zu den Spülluftverteilern 9 geschlossen. Das zu reinigende Gas tritt auf der Rohgasseite 7 in das Faltenpack 3 ein und durchströmt das Filtermedium 4, wobei der Staub auf der Rohgasseite 7 des Filtermediums 4 abgeschieden wird. Das gereinigte Gas gelangt durch die reingasseitigen Falten des Filterpackes 3 in die Kammern 12 und verläßt das Filter durch den strömungsdynamischen Schalter 6.

Bei der Abreinigung werden nun beidseitige Öffnungen 15 zur ersten, dem Rahmen 2 benachbarten Falte freigegeben. Die Spülluft oder ein Spülgas 14 strömt von hier aus in die zugehörige der Kammern 12 und in die darunterliegende reingasseitige Falte. Infolge der Durchströmungswiderstände von Filtermedium 4 und Fasermedium des strömungsdynamischen Schalters 6 baut sich in Kammer 12 und jeweils zugehöriger Falte ein Überdruck auf. Die Strömungsrichtung durch das Filtermedium 4 kehrt sich um und der außen angelagerte Staub wird abgelöst und ausgetragen. Die Strömungswiderstände von dem Filtermedium 4 und dem strömungsdynamischen Schalter 6 sind so aufeinander abgestimmt, daß unter Abreinigungsbedingungen maximal 10% des gesamten Spülgases durch den strömungsdynamischen Schalter 6 als Verlustströmung verloren gehen. Natürlich weist der strömungsdynamische Schalter 6 eine höhere Durchlässigkeit als der abzureinigende Filter auf. Durch eine geeignete Ausführung des strömungsdynamischen Schalters 6 mit druckabhängigem, variablen Strömungswiderstand kann der Leckvolumenstrom nahezu völlig unterbunden werden. Das Fasermedium bzw. Gewebe des strömungsdynamischen Schalters 6 wirkt damit als Strömungsschalter, der während der Abreinigung sperrt und unter Filtrationsbedingungen vollen Durchgang hat. Der Strömungswiderstand wird vorzugsweise so gewählt, daß der zusätzliche Druckverlust während der Filtration bei typischen Filtrationsgeschwindigkeiten von 2,5 cm/s höchstens 30% beträgt.

Als Materialien für den strömungsdynamischen Schalter 6 kommen Glasfaser-, Kunststofffaser- und Metallfaservliese sowie Gewebe aus denselben Materialien in Frage. Ebenso sind Kunststoff- oder Metallsintermaterialien und Kunststoff-oder Metalllochmasken mit regelmäßiger oder statistischer Lochung sowie Schaummaterialien geeignet. Ebenso sind Kombinationen von verschiedenen oder mehreren dieser Materialien möglich. Der Filterbetrieb erfolgt bei Umgebungsdruck, der Abreinigungs- oder Spüldruck liegt im Bereich von 50-100mbar Überdruck.

### Bezugszeichenliste:

- 1: Kassettenfilter
- 2: Rahmen
- 3: Faltenpack
- 4: Filtermedium
- 6: strömungsdynymischer Schalter
- 7: Rohgasseite
- 8: Reingasseite
- 9: Spülluftverteiler
- 10: umlaufender Riemen
- 11: Faltenenden
- 12: Kammern
- 13: Kammerwände
- 14: Spülluft
- 15: Öffnungen
- 16: Aussparung

## Patentansprüche

1. Verfahren zum Abreinigen von durch Rohgas einseitig angeströmten Filtern aus gefaltetem Filtermaterial durch Rückspülen des Filters von der Reingasseite her, wobei der zum Rückspülen erforderliche Spülgasstrom oder Spülluft vom Reingasraum hinter dem Filter her unter Absperren desselben durch den Filter geführt wird, **dadurch gekennzeichnet, dass**
a) das Absperren durch einen strömungsdynamischen Schalter (6), welcher keine beweglichen Teile aufweist, erfolgt, dessen Durchlass durch den an ihm vom Reingasraum (8, 12) her wechselweise anliegenden niedrigeren Prozessdruck freigegeben und durch den höheren Rückspüldruck gesperrt wird, sowie
b) als Materialien für den strömungsdynamischen Schalter (6), welcher keine beweglichen Teile aufweist, Glasfaser-, Kunststofffaser- und Metallfaservliese oder Gewebe aus denselben Materialien oder Kunststoff-, Metallsintermaterialien oder Kunststoff- oder Metalllochmasken mit regelmäßiger oder statistischer Lochung oder Schaumstoffe verwendet werden.

2. Verfahren nach Anspruch 1, **dadurch gekennzeichnet, daß** der strömungsdynamische Schalter (6) unter Prozeßdruck eine höhere Durchlässigkeit als der abzureinigende Filter (1) aufweist.

3. Verfahren nach einem der Ansprüche 1 oder 2, **dadurch gekennzeichnet,**
**daß** die Abreinigung unter Prozeßdruck mit einem Rückspüldruck durchgeführt wird, der höher ist als der Prozeßdruck.

4. Verfahren nach einem der Ansprüche 1 bis 3, **dadurch gekennzeichnet,**
**daß** das Rückspülmedium impulsweise eingeleitet wird.

5. Vorrichtung zur Ausübung des Verfahrens nach einem der Ansprüche 1 bis 4 mit mindestens einem einseitig angeströmten Filter aus gefaltetem Filtermaterial wobei der Reingasraum mindestens eine Abluftöffnung und eine Anschlussleitung für Spülluft aufweist,
**dadurch gekennzeichnet, dass**
in Strömungsrichtung gesehen hinter dem Filter (1) ein strömungsdynamischer Schalter (6), welcher keine beweglichen Teile aufweist, angeordnet ist, dessen Durchlass wechselweise durch den an ihm vom Reingasraum (8, 12) her anliegenden niedrigeren Prozessdruck freigegeben und durch den höheren Rückspüldruck gesperrt wird, wobei der strömungsdynamische Schalter (6), welcher keine beweglichen Teile aufweist, aus Glasfaser-, Kunststofffaser- und Metallfaservliese oder Gewebe aus denselben Materialien oder Kunststoff-, Metallsintermaterialien oder Kunststoff- oder Metalllochmasken mit regelmäßiger oder statistischer Lochung oder Schaumstoffe besteht.

6. Vorrichtung nach Anspruch 5, **dadurch gekennzeichnet, daß** der die Durchlässigkeit des Schalters (6) bestimmende Druckverlust im Bereich von 30 bis 60 Pa bei 2,5 cm/sec Strömungsgeschwindigkeit liegt.

## Claims

1. Process for recleaning filters of folded filter material, which are approached by the offgas flow on one side, by backwashing the filter from the clean gas side, with the flow of scavenging gas or scavenging air required for backwashing being passed through the filter from the clean gas area downstream of the filter, while this area is shut off, **characterized by**
a) the shut-off being achieved by a flow dynamics switch (6) that has no movable parts and is opened by the alternating smaller process pressure in the clean gas area (8, 12) and closed by the higher backwashing pressure as well as by
b) glass-fiber, plastic-fiber, and metal-fiber fleece, or fabric of the same materials, or plastic or metal sintered materials, or plastic or metal perforated masks with a regular or statistic perforation, or foamed plastics being used as materials for the flow dynamics switch (6) that has no movable parts.

2. Process according to Claim 1, **characterized by** the flow dynamics switch (6) under process pressure having a higher permeability than the filter to be recleaned (1).

3. Process according to one of Claims 1 or 2, **characterized by** recleaning under process pressure being carried out at a backwashing pressure that is higher than the process pressure.

4. Process according to one of Claims 1 through 3, **characterized by** the backwashing medium being introduced in a pulsed manner.

5. Facility for running the process according to one of Claims 1 through 4, with at least one one-sidedly approached filter of folded filter material and the clean gas area having at least one exhaust air opening and one connection line for scavenging air, **characterized by**
a flow dynamics switch (6) that has no movable parts being installed downstream of the filter (1) and this switch being opened and closed alternately by the lower process pressure in the clean gas area (8, 12) and the higher backwashing pressure, respectively, and with this flow dynamics switch (6) that has no movable parts consisting of glass-fiber, plastic-fiber, and metal-fiber fleece or fabric of the same materials, or of plastic or metal sintered materials, or of plastic or metal perforated masks with a regular or statistic perforation, or of foamed plastics.

6. Facility according to Claim 5, **characterized by** the pressure loss determining the permeability of the switch (6) being in the range of 30 to 60 Pa at a flow rate of 2.5 cm/sec.

## Revendications

1. Procédé de dépoussiérage de filtres en matière à plis sur lesquels se dirigent d'un seul côté des gaz brut, fonctionnant par rétrolavage du filtre à partir du côté du gaz purifié, le débit de gaz de lavage ou l'air de balayage nécessaires au rétrolavage étant conduits du volume de gaz purifié derrière le filtre, en obturant celui-ci,
**caractérisé en ce que**
(a) l'obturation se fait par un appareil de coupure aérohydrodynamique (6) qui ne présente pas de parties mobiles et dont le passage est libéré par la pression de service plus basse appliquée en alternance à partir du volume de gaz purifié (8, 12) et obturé par la pression de rétrolavage plus élevée, ainsi que
(b) les matériaux utilisés pour l'appareil de coupure aérohydrodynamique (6) ne présentant pas de parties mobiles sont des voiles en fibre de verre, en matières plastiques et en fibre métalliques ou des tissus de ces mêmes matériaux ou de matériau en plastique, en métal céramique ou des masques à trous plastiques ou métalliques à perforation régulières ou statistiques, ou des mousses synthétiques.

2. Procédé selon la revendication 1, **caractérisé en ce que**
l'appareil de coupure aérohydrodynamique (6) présente, sous un pression de service plus élevée, une perméabilité plus élevée que le filtre à dépoussiérer (1).

3. Procédé selon l'une des revendications 1 ou 2, **caractérisé en ce que**
le dépoussiérage sous pression de service se fait à une pression de rétrolavage supérieure à la pression de service.

4. Procédé selon l'une des revendications 1 à 3, **caractérisé en ce que**
le fluide de rétrolavage est introduit par impulsions.

5. Dispositif permettant de réaliser le procédé selon l'une de revendications 1 à 4,
équipé au moins d'un filtre en matière à plis sur lequel se dirige le fluide d'un côté,
le volume de gaz purifié présentant au moins une ouverture d'évacuation et une ligne de raccordement pour l'air de balayage,
**caractérisé en ce que**
vu dans le sens de l'écoulement, derrière le filtre (1), un appareil de coupure aérohydrodynamique (6) est disposé qui ne présente pas de parties mobiles et dont le passage est libéré par la pression de service plus basse appliquée en alternance à partir du volume de gaz purifié (8, 12) et obturé par la pression de rétrolavage plus élevée, l'appareil de coupure aérohydrodynamique (6) ne présentant pas de parties mobiles étant en voiles en fibre de verre, en matières plastiques et en fibre métalliques ou des tissus de ces mêmes matériaux ou de matériau en plastique, en métal céramique ou des masques à trous plastiques ou métalliques à perforation régulières ou statistiques, ou des mousses synthétiques.

6. Dispositif selon la revendication 5, **caractérisé en ce que** la perte de pression déterminant la perméabilité de l'appareil de coupure (6) est de 30 à 60 Pa pour une vitesse d'écoulement de 2,5 cm/sec.
